# EUROPÄISCHE PATENTSCHRIFT

(11) **EP 1 272 752 B1**
(45) Veröffentlichungstag und Bekanntmachung des Hinweises auf die Patenterteilung: **14.09.2005**
(21) Anmeldenummer: 01927605.4
(22) Anmeldetag: 24.03.2001
(51) Int. Cl.: F02D 41/02, F02D 28/00

(54) **VERFAHREN UND VORRICHTUNG ZUR STEUERUNG DER ANTRIEBSEINHEIT EINES FAHRZEUGS**
METHOD AND DEVICE FOR CONTROLLING THE DRIVE UNIT OF A VEHICLE
PROCEDE ET DISPOSITIF POUR LA COMMANDE DE L'UNITE D'ENTRAINEMENT D'UN VEHICULE AUTOMOBILE

(30) Priorität: 04.04.2000 DE 10016645; 19.06.2000 DE 10029168; 26.09.2000 DE 10048015
(43) Veröffentlichungstag der Anmeldung: 08.01.2003
(73) Patentinhaber: ROBERT BOSCH GMBH, 70442 Stuttgart (DE)
(72) Erfinder: HOMEYER, Manfred, 71706 Markgroeningen (DE); KAISER, Lilian, 70597 Stuttgart (DE); NICOLAOU, Michael, 71665 Vaihingen Enz (DE); JESSEN, Holger, 71642 Ludwigsburg (DE); SCHUSTER, Thomas, 71573 Allmersbach (DE); KIND, Werner, 71706 Markgroeningen (DE); MAYER, Rainer, 71263 Weil Der Stadt (DE)
(86) Internationale Anmeldenummer: PCT/DE2001/001153
(87) Internationale Veröffentlichungsnummer: WO 2001/075288

(56) Entgegenhaltungen:
- EP-A- 0 933 522
- DE-A- 19 536 038
- DE-A- 19 739 564
- DE-A- 19 739 567
- DE-A- 19 953 767
- BECKMANN R ET AL: "DIE NEUE MOTORSTEUERUNG VON SIEMENS FUER DIE BMW SECHSZYLINDER- OTTOMOTOREN" MTZ MOTORTECHNISCHE ZEITSCHRIFT, FRANCKH'SCHE VERLAGSHANDLUNG,ABTEILUNG TECHNIK. STUTTGART, DE, Bd. 59, Nr. 12, Dezember 1998 (1998-12), Seiten 820-825, XP000799090 ISSN: 0024-8525
- MEISBERGER D ET AL: "DIE NEUE MOTORSTEUERUNG ME 7.2 VON BOSCH FUER DE BMW V8-MOTOR" MTZ MOTORTECHNISCHE ZEITSCHRIFT, FRANCKH'SCHE VERLAGSHANDLUNG,ABTEILUNG TECHNIK. STUTTGART, DE, Bd. 59, Nr. 12, Dezember 1998 (1998-12), Seiten 826-834, XP000799091 ISSN: 0024-8525

## Beschreibung

### Stand der Technik

Die Erfindung betrifft ein Verfahren und eine Vorrichtung zur Steuerung der Antriebseinheit eines Fahrzeugs.

Bei modernen Fahrzeugsteuerungen wirken auf die vorhandenen Stellglieder (z.B. Antriebseinheit, Getriebe, etc.) eine Vielzahl von zum Teil gegensätzlichen Vorgaben. So soll beispielsweise die Antriebseinheit eines Fahrzeugs auf der Basis eines vom Fahrer vorgegebenen Fahrwunsches, Sollwerten von externen und/oder internen Regel- und Steuerfunktionen, wie beispielsweise einer Antriebsschlupfregelung, einer Motorschleppmomentenregelung, einer Getriebesteuerung, einer Drehzahl- und/oder Geschwindigkeitsbegrenzung und/oder einer Leerlaufdrehzahlregelung gesteuert werden. Diese Sollvorgaben zeigen zum Teil entgegengesetzten Charakter, so dass, da die Antriebseinheit lediglich eine dieser Sollwertvorgaben einstellen kann, diese Sollwertvorgaben koordiniert werden müssen, d.h. eine zu realisierende Sollwertvorgabe auszuwählen ist.

Aus der DE 197 39 564 A1 ist ein Verfahren und eine Vorrichtung zur Steuerung einer Antriebseinheit eines Fahrzeugs bekannt, wobei auf der Basis des Fahrerwunsches ein Soll-Momentenwert oder ein Soll-Leistungswert gebildet wird, der zur Steuerung der Antriebseinheit dient, wobei ein maximal zulässiges Moment oder eine maximal zulässige Leistung bestimmt wird und der Sollwert auf den maximal zulässigen Wert begrenzt wird, wenn er den maximal zulässigen Wert überschreitet. In Figur 4 der DE 97 39 564 A 1 ist die Begrenzung des Soll-Momentenwertes für den Füllungspfad dargestellt. Dies wird in einem Koordinator (104) durchgeführt, in dem das vom Fahrer abgeleitete Pedalmoment in einer Maximalwertauswahl mit momentenerhöhenden externen und/oder internen Eingriffen verglichen wird. Der größte Wert wird dann in einer Minimalwertauswahl mit momentenerniedrigenden externen und/oder internen Eingriffen verglichen.

Im Zusammenhang mit der Steuerung einer Antriebseinheit ist aus der DE 197 39 567 A1 eine derartige Koordination verschiedener Sollmomentenwerte bekannt. Dort wird durch Maximal- und/oder Minimalwertauswahl aus den Momentensollwerten ein Sollwert ausgewählt, der im aktuellen Betriebszustand durch Bestimmung der Großen der einzelnen Steuerparameter der Antriebseinheit, beispielsweise bei einer Brennkraftmaschine der Füllung, des Zündwinkels und/oder der einzuspritzenden Kraftstoffmenge, realisiert wird. Mit den Sollvorgaben können verschiedene Eigenschaften, beispielsweise bezüglich der erforderlichen Dynamik der Einstellung, der Priorität, etc., verbunden sein, die ebenfalls gegensätzlicher Natur sein können und die in der bekannten Koordination der Sollvorgaben nicht mit berücksichtigt sind.

Um auch derartige Eigenschaften zu berücksichtigen, ist in der nicht vorveröffentlichten deutschen Patentanmeldung 199 61 291.9 vom 18.12.1999 vorgesehen, die den jeweiligen Sollmomenten zugeordneten Eigenschaften ebenfalls mittels eines Koordinators in vergleichbarer Weise zu koordinieren, um letztendlich einen resultierenden Eigenschaftsvektor zu erhalten, der der Einstellung der Stellgrößen der Antriebseinheit zu Grunde gelegt wird.

Bei der bekannten Lösung werden die Sollmomente anhand ihrer Wirkung im Maximal- und Minimalwertauswahlstufen zusammengefasst und getrennt für den langsamen (Füllungs-) Steuerpfad und den schnellen (Zündungs-) Steuerpfad koordiniert. Eine verhältnismäßig aufwendige Struktur mit speziell an die jeweilige Ausgestaltung der Antriebseinheit (z.B. Ottomotor) angepassten Schnittstellen ist die Folge.

### Vorteile der Erfindung

Durch Entkopplung der Koordination der externen Eingriffs- und der internen Eingriffsgrößen , gemäß den Merkmalen nach Anspruch 1, 10 und 14, wird ein von der konkreten Antriebseinheit unabhangiger Teil der Momentenstruktur geschaffen, der für nahezu alle Arten von Antriebseinheiten, beispielsweise für Diesel- und Benzinmotoren sowie für Elektromotoren gleichermaßen genutzt werden kann. Lediglich der Koordinator für die internen Größen, also der für die jeweilige Art spezifischen Größen, muß an die jeweilige Antriebseinheit angepasst sein.

Ergebnis ist daher eine in vorteilhafter Weise vereinheitlichte Schnittstelle und eine übersichtlichere Struktur.

Ferner wird durch die Entkopplung der Umsetzung des aus der Koordination resultierten Moments und des dort resultierenden Eigenschaftsvektors in Stellgrößen der Antriebseinheit die Umsetzung des Moments von der Quelle der Momentenanforderung entkoppelt und Freiheitsgrade gewonnen. So ist beispielsweise nicht die Quelle der Anforderung für die Art der Realisierung (z.B. über Zündwinkel) entscheidend. Dieses wird nach Maßgabe der aktuellen Eigenschaften unabhängig von dem Ursprung der zu realisierenden Anforderung bestimmt.

Die Vorgabe definierter, mit Blick auf eine Optimierung der Motorsteuerung, der Struktur und der Schnittstelle ausgewählte Größen, die vom motorunabhängigen Teil zum motorspezifischen und/oder umgekehrt übertragen werden, d.h. die Definition der Schnittstelle zwischen den beiden Teilen mittels der vom jeweiligen Teil bereitzustellenden Größen, erlaubt eine weitere Optimierung und Vereinfachung der Struktur und der Schnittstelle. Ferner wird das Zusammenwirken der beiden Teilen auch bei getrennten Entwicklungen der beiden Teile sichergestellt.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert. Dabei zeigt Figur 1 ein Übersichtsschaltbild einer Steuereinrichtung zur Steuerung einer Antriebseinheit. Figur 2 ist ein Übersichtsablaufdiagramm zur Darstellung der nachfolgend anhand des Ablaufdiagramms in Figur 3 detaillierter beschriebenen Momentenstruktur skizziert. Die Figuren 4 und 5 zeigen in einem bevorzugten Ausführungsbeispiel eine konkrete Ausgestaltung der Schnittstelle zwischen motorspezifischem und motorunsbhängigen Teil unter Angabe der vom jeweiligen Teil bereitzustellenden Größen.

### Beschreibung von Ausführungsbeispielen

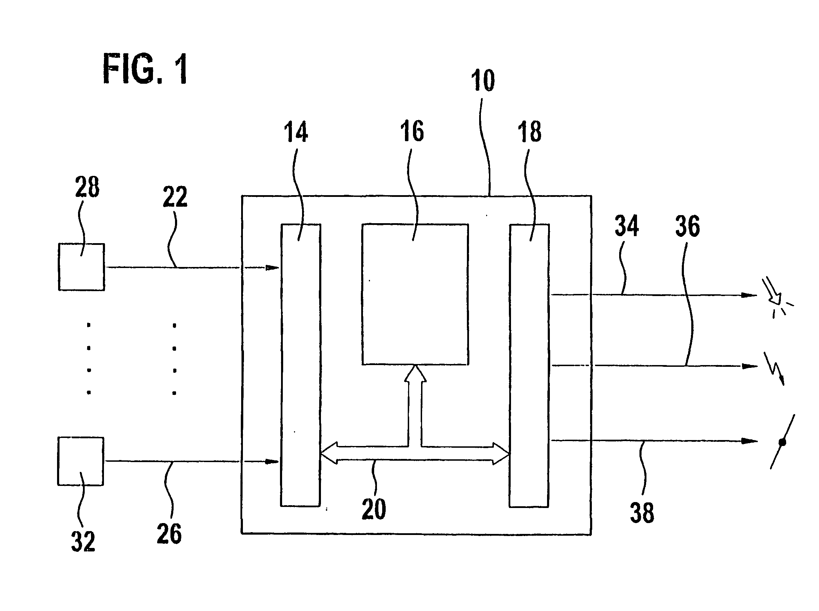

Figur 1 zeigt ein Blockschaltbild einer Steuereinrichtung zur Steuerung einer Antriebseinheit, insbesondere einer Brennkraftmaschine. Es ist eine Steuereinheit 10 vorgesehen, welche als Komponenten eine Eingangsschaltung 14, wenigstens eine Rechnereinheit 16 und eine Ausgangsschaltung 18 aufweist. Ein Kommunikationssystem 20 verbindet diese Komponenten zum gegenseitigen Datenaustausch. Der Eingangsschaltung 14 der Steuereinheit 10 werden Eingangsleitungen 22 bis 26 zugeführt, welche in einem bevorzugten Ausführungsbeispiel als Bussystem ausgeführt sind und über die der Steuereinheit 10 Signale zugeführt werden, welche zur Steuerung der Antriebseinheit auszuwertende Betriebsgrößen repräsentieren. Diese Signale werden von Meßeinrichtungen 28 bis 32 erfaßt. Derartige Betriebsgrößen sind Fahrpedalstellung, Motordrehzahl, Motorlast, Abgaszusammensetzung, Motortemperatur, etc. Über die Ausgangsschaltung 18 steuert die Steuereinheit 10 die Leistung der Antriebseinheit. Dies ist in Figur 1 anhand der Ausgangsleitungen 34, 36 und 38 symbolisiert, über welche die einzuspritzende Kraftstoffmasse, den zündwinkel der Brennkraftmaschine sowie wenigstens eine elektrisch betätigbare Drosselklappe zur Einstellung der Luftzufuhr zur Brennkraftmaschine betätigt werden. Neben den geschilderten Eingangsgrößen sind weitere Steuersysteme des Fahrzeugs vorgesehen, die der Eingangsschaltung 14 Vorgabegrößen, beispielsweise Drehmomentensollwerte, übermitteln. Derartige Steuersysteme sind beispielsweise Antriebsschlupfregelungen, Fahrdynamikregelungen, Getriebesteuerungen, Motorschleppmomentenregelungen, Geschwindigkeitsregler, Geschwindigkeitsbegrenzer, etc. Über die dargestellten Stellpfade werden die Luftzufuhr zur Brennkraftmaschine, der Zündwinkel der einzelnen Zylinder, die einzuspritzende Kraftstoffmasse, der Einspritzzeitpunkt und/oder das Luft-/Kraftstoffverhältnis, etc. eingestellt. Neben den dargestellten Sollwertvorgaben, den externen Sollwertvorgaben, zu denen auch eine Sollwertvorgabe durch den Fahrer in Form eines Fahrwunsches und eine Maximalgeschwindigkeitsbegrenzung gehören, sind interne Vorgabengrößen zur Steuerung der Antriebseinheit vorhanden, beispielsweise eine Drehmomentenänderung einer Leerlaufregelung, eine Drehzahlbegrenzung, die eine entsprechende Sollvorgabengröße ausgibt, eine Drehmomentenbegrenzung, etc..

Mit den einzelnen Sollwertvorgabengrößen sind Randbedingungen oder Eigenschaften verbunden, welche die Art und Weise der Umsetzung der Sollwertvorgabegröße darstellen. Dabei können je nach Anwendungsbeispiel mit einer Sollwertvorgabengröße eine oder mehrere Eigenschaften verbunden sein, so daß unter dem Begriff Eigenschaften in einem vorteilhaften Ausführungsbeispiel ein Eigenschaftsvektor zu verstehen ist, in dem die verschiedenen Eigenschaftsgrößen eingetragen sind. Eigenschaften von Sollwertvorgabegrößen sind z.B. die erforderliche Dynamik bei der Einstellung der Sollwertvorgabengröße, die Priorität der Sollwertvorgabengröße, die Größe der einzustellenden Momentenreserve, und/oder der Komfort der Verstellung (z.B. Änderungsbegrenzung). Diese Eigenschaften sind in einem bevorzugten Ausführungsbeispiel vorhanden. In anderen Ausführungsbeispielen sind nur eine oder mehrere ausgewählte Eigenschaften vorgesehen.

Die beschriebene Vorgehensweise ist nicht nur in Verbindung mit Brennkraftmaschinen anwendbar, sondern auch bei anderen Antriebskonzepten, z.B. Elektromotoren. In diesem Fall sind die Stellgrößen entsprechend anzupassen.

Als Sollwertvorgabegröße werden im bevorzugten Ausführungsbeispiel Drehmomentengrößen verwendet. In anderen Ausführungen werden unter entsprechender Anpassung andere, sich auf Ausgangsgrößen der Antriebseinheit beziehende Größen wie Leistung, Drehzahl, etc. Sollwerte vorgegeben.

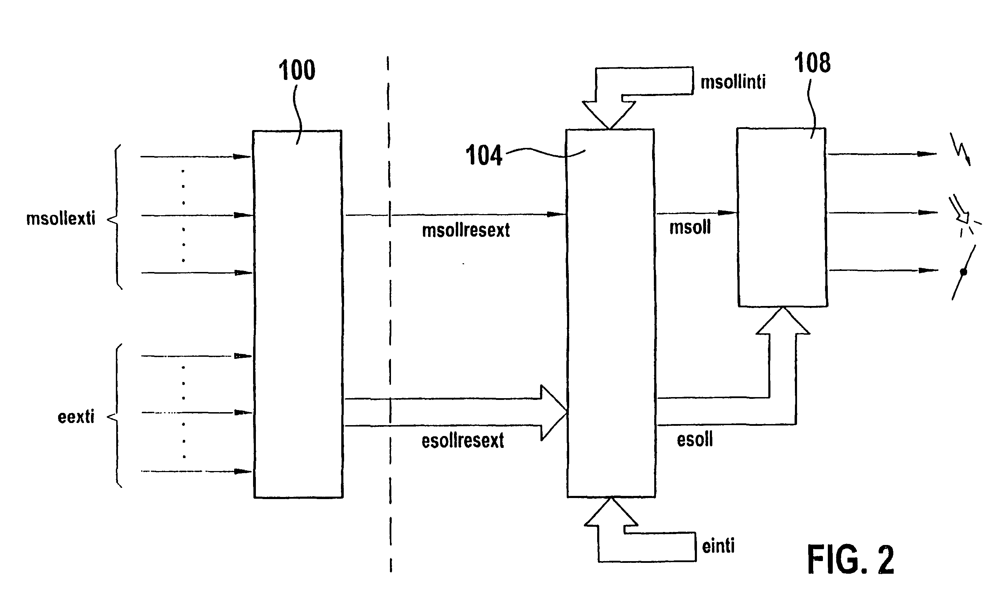

Figur 2 zeigt ein Übersichtsablaufdiagramm der in der Rechnereinheit 16 ablaufenden Motorsteuerungsprogramm, wobei die Koordination externer Größen und die interner Größen gegenseitig entkoppelt und diese Koordinationen ebenfalls von der Umsetzung des resultierenden Sollwertes und des resultierenden Eigenschaftswertes in Stellgrößen der Antriebseinheit entkoppelt sind.

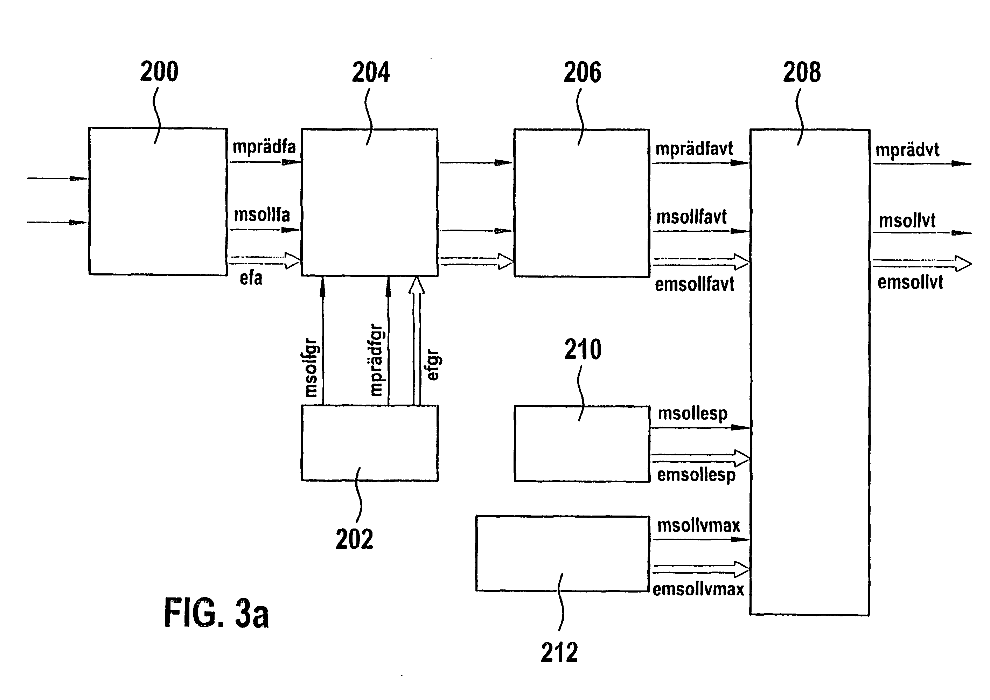

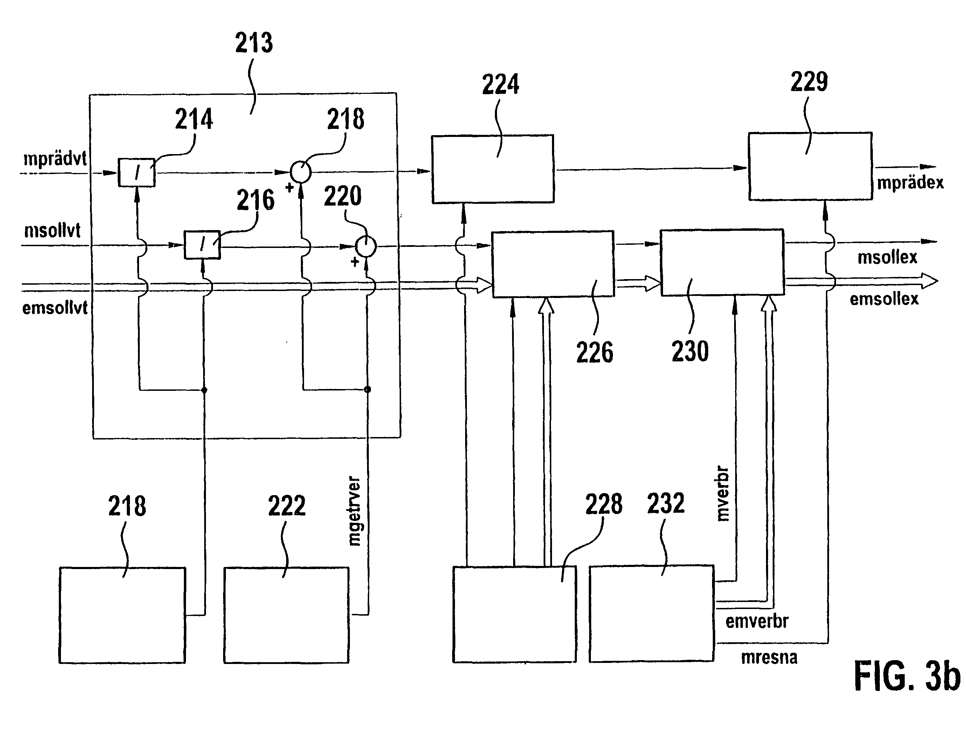

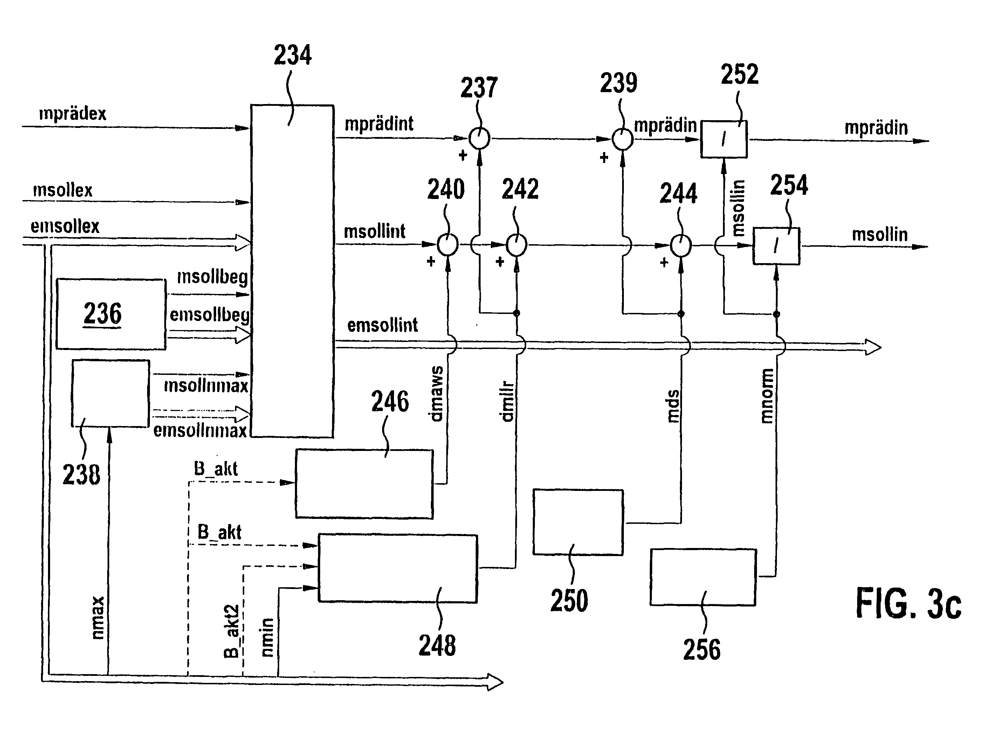

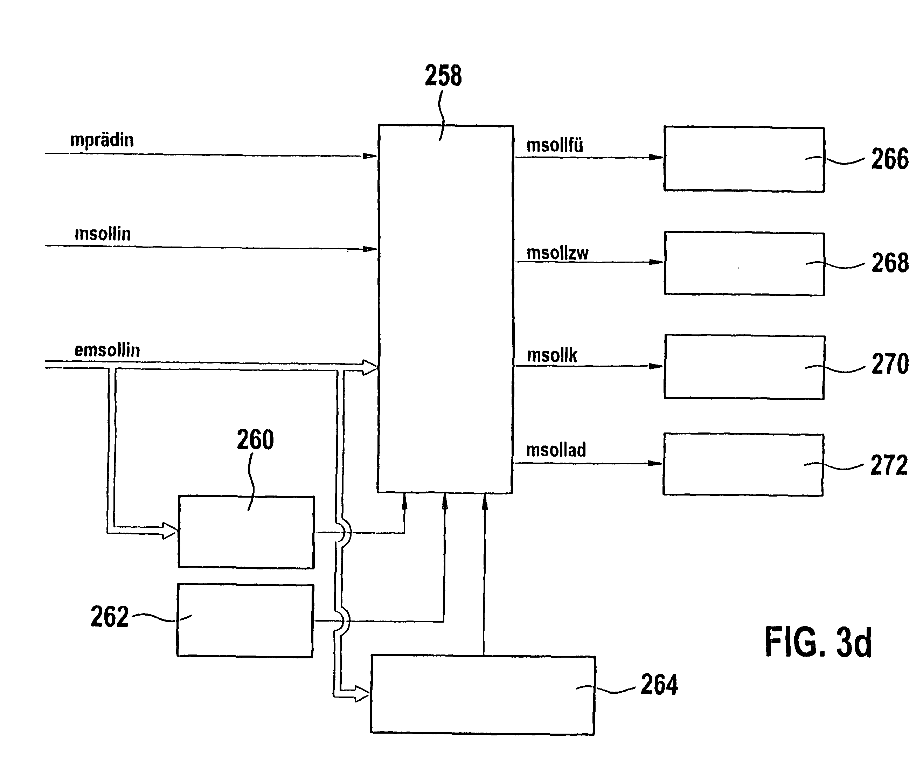

Die in Figur 2 gezeigten Elemente stellen wie auch entsprechend in Figur 3 einzelne Programme, Programmschritte oder Programmteile dar, während die Verbindungslinien zwischen den Elementen den Informationsfluß repräsentieren.

In Figur 2 ist ein erster Koordinator 100 für die externen Sollmomentenvorgabegrößen samt ihrer Eigenschaftsgrößen vorgesehen. Die externen Sollgrößen msollexti und die ihnen zugeordneten Eigenschaft(en) eexti werden dem Koordinator 100 zugeführt. In einem Ausführungsbeispiel werden die Sollgrößen z.B. im Rahmen von Minimal- und Maximalwertauswahlschritten miteinander verglichen. Als Ergebnis wird ein resultierender Momentensollwert msollresext und die zugehörige Eigenschaft(en) esollresext weitergegeben. In anderen Ausführungen wird zur Koordination z.B. eine Eigenschaft im Rahmen einer entsprechenden Auswahl (z.B. kleinste stellzeit) ausgewählt und die Sollwerte oder daraus abgeleitete Größen zur Bildung eines resultierenden Wertes miteinander verknüpft. Die externen Sollgrößen stellen dabei die motorunabhängigen Eingriffsgrößen dar, wie Fahrerwunschmoment, das Sollmoment eines Fahrgeschwindigkeitsreglers oder eines adaptiven Fahrgeschwindigkeitsreglers (ACC), einer Geschwindigkeitsbegrenzung, einer Fahrstabilitätsregelung, einer Motorschleppmomentenregelung und/oder einer Antriebsschlupfregelung. Diese motorunabhängigen Vorgabegrößen, die dem Abtrieb zuzurechnen sind, stellen Abtriebsmomente bzw. Getriebeausgangsmomente dar und werden auf dieser Ebene koordiniert. Hier sind auch Fahrkomfortfunktionen angeordnet wie eine Lastschlagdämpfungfunktion oder eine Dashpot-Funktion. Weitere motorunabhängige Größen betreffen den Vortrieb. Dazu gehören Sollmomente, die von einer Getriebesteuerung stammen und den Getriebeschaltvorgang unterstützen, ein Begrenzungssollwert zum Getriebeschutz und/oder Momentenbedarfswerte von Nebenaggregaten wie Generator, Klimakompressor etc.. Auch diese stellen externe (motorunabhängige) Eingriffe dar und werden daher im Koordinator 100 koordiniert. Diese Größe repräsentieren ein Getriebeausgangsmoments bzw. ein Motorausgangsmoment, das auch Ausgangsgröße des Koordinators 100 ist. Zur Umrechnung der Momentenwerte werden Getriebe/Wandler-Verluste, Verstärkungen im Triebstrang, etc. berücksichtigt.

Wie oben erwähnt gilt entsprechendes für die Eigenschaften der externen Größen exti. Jedem der obengenannten Sollgrößen ist dabei wenigstens eine bestimmte Eigenschaft zugeordnet, beispielsweise eine bestimmte Stellzeit, aus denen entsprechend der Momentenkoordination im Koordinator 100 ein resultierender Eigenschaftsvektor esollresext gebildet wird. Der Eigenschaftsvektor kann in einem Ausführungsbeispiel auch Informationen über der aktuellen Betriebszustand (z.B. losgelassenes Fahrpedal) sowie extern vorgegebene Grenzwerte enthalten. Die aus der Koordination der externen Größen im Koordinator 100 hervorgegangenen Werte werden einem Koordinator 104 zugeführt, in dem die resultierenden externen Größen mit internen, d.h. motorspezifischen Größen koordiniert werden. Zwischen den Koordinatoren 100 und 104 liegt die Schnittstelle zwischen dem motorunabhängigen und dem motorspezifischen Teil der Motorsteuerung.

Die internen Sollgrößen msollinti bzw. einti werden dem Koordinator 104 zugeführt. Die motorabhängigen Größen sind insbesondere Sollwerte interner Momentenbegrenzungen, beispielsweise aus Bauteileschutzgründen, aus Ausmagerschutzgründen bei Vollast, ein Sollwert für eine Maximaldrehzahlbegrenzung, etc. Ferner werden zur Bestimmung des Sollmoments in Figur 2 nicht dargestellte Korrekturgrößen von Drehzahlreglern, Abwürgeschutzregler, Leerlaufregler sowie die Motorverluste und Schleppmomente und motornahe Fahrkomfortfunktionen eingerechnet. Die Ausgangsgrößen des Koordinators 104 sind ein Sollwert für das innere Motormoment, d.h. das durch Verbrennung erzeugte Motormoment MSOLL und ein zugehöriger Eigenschaftsvektor esoll.

Die von Koordinator 104 ausgegebenen resultierenden Größen werden einem motorspezifischen Umsetzer 108 zugeführt, der die resultierende Momentenanforderung (inneres Sollmoment und Eigenschaftsvektor) in Sollwerte für die motorspezifischen Stellpfade umsetzt. Bei einem Benzinmotor sind dies beispielsweise Füllung, Zündwinkel und/oder Einspritzung, bei einem Dieselmotor z.B. die Kraftstoffmenge, bei einem Elektromotor beispielsweise der Strom. Dabei wird der aktuelle Betriebspunkt des Motors und weitere die Stellpfade beeinflussende Randbedingungen beachtet. Die Umsetzung des Sollmoments und des Eigenschaftsvektors in Stellpfade wird beispielsweise wie im eingangs genannten Stand der Technik beschrieben durchgeführt, in dem der Stellpfad ausgewählt wird, der die Bereitstellung des geforderten Moments in der geforderten Zeit gewährleisten kann. Teil des Umsetzers 108 sind auch Eingriffe, die direkt auf einen Stellpfad wirken, beispielsweise Zündwinkeleingriffe eines Antiruckelreglers, zusätzliche Füllung für eine Momentenreserve im Leerlauf, etc.

Vorstehend werden die Eigenschaften in einem Eigenschaftsvektor e zusammengefasst. Je nach Ausführungsbeispiel umfasst der Eigenschaftsvektor unterschiedliche Größen. In einem bevorzugten Ausführungsbeispiel, welches auch weiter unten anhand von Figur 3 dargestellt wird, umfasst der Eigenschaftsvektor wenigstens ein prädiziertes Moment, das im Normalfall dem ungefilterten Fahrerwunsch entspricht, jedoch von anderen Eingriffen, insbesondere Eingriffe, die eine gewisse Momentenreserve benötigen, angepasst werden kann. Ferner ist eine zu jedem Sollmoment gehörende Stellzeit sowie Informationen zum Fahrzeugbetrieb, beispielsweise Dynamikinformationen, geforderte Drehzahlgrenzen, Lastschlagdämpfungaktiv-Bits oder Dashpot-Aktiv-Bits, Leerlauf-Aktiv-Bits, Komforteinstellungen, etc. Bestandteil des Eigenschaftsvektors.

Figur 3 zeigt ein Ablaufdiagramm, welches ein bevorzugtes Ausführungsbeispiel der oben dargestellten Momentenstruktur zeigt. Dabei ist in den Figuren 3a und 3b ein bevorzugtes Ausführungsbeispiel des Koordinators 100, in den Figuren 3c und 3d des Koordinators 104 und des Umsetzers 108 dargestellt. Auch hier beschreiben die einzelnen Elemente Programme, Programmteile oder Programmschritte eines im Mikrocomputer 16 der Steuereinheit ablaufenden Programms, während die Verbindungsleitungen des Informationsfluss repräsentieren.

Zunächst wird in 200 beispielsweise auf der Basis der Motordrehzahl und dem Betätigungsgrad eines Fahrpedals durch den Fahrer ein Fahrerwunschmoment nach Maßgabe beispielsweise eines Kennfeldes bestimmt. Dieses Fahrerwunschmoment MSOLLFA stellt ein Vortriebsmoment dar. Entsprechend wird ein prädizierte Fahrerwunschmoment MPRÄDFA ermittelt, welches im bevorzugten Ausführungsbeispiel zunächst dem Fahrerwunschmoment entspricht und im folgenden das zukünftig mit einer gewissen Wahrscheinlichkeit einzustellende Moment repräsentiert. Dem Fahrerwunschmoment zugeordnet sind wenigstens eine Eigenschaft efa, beispielsweise eine Stellzeit, innerhalb derer das Fahrerwunschmoment einzustellen ist, und/oder der Betätigungszustand des Pedals. Die Stellzeit wird beispielsweise abhängig von der Schnelligkeit der Pedalbetätigung ermittelt und ausgegeben. Ist das Fahrzeug mit einem Fahrgeschwindigkeitsregler 202 oder einem adaptiven Fahrgeschwindigkeitsregler, welcher zusätzlich den Abstand zu einem vorausfahrenden Fahrzeug berücksichtigt, ausgestattet, werden dort eine Momentensollgröße MSOLLFGR, eine prädizierte Größe MPRÄDFGR (die dem Sollmoment oder der stationär zu erreichenden Momentengröße entsprechen kann) und zugeordnete Eigenschaftsgrößen efgr (Stellzeit, Aktivierungszustand des Reglers, etc.) gebildet. Im Koordinator 204 werden die von der Fahrerwunschermittlung 200 und vom Geschwindigkeitsregler 202 übertragenen Größen koordiniert. So wird beispielsweise bei eingeschaltetem Fahrgeschwindigkeitsregler das Sollmoment und das prädizierte Moment, welches vom Fahrgeschwindigkeitsregler 202 ermittelt wurde, weitergegeben. Entsprechend wird auch der diesem Moment zugeordnete Eigenschaftsvektor, beispielsweise bezüglich der Stellzeit, weitergegeben. Ist der Fahrgeschwindigkeitsregler abgeschaltet, so gibt der Koordinator 204 den entsprechenden Fahrerwunschgrößen den Durchgriff frei. Ferner wird dieser Koordinator z.B. das Fahrerwunschsollmoment samt Eigenschaften weitergeben, wenn dieses größer als das Geschwindigkeitsreglersollmoment ist. Die resultierenden Größen des Koordinators 204 werden den Fahrkomfortfunktionen 206 zugeführt. Unter diesen werden beispielsweise Lastschlagdämpfungsfunktionen oder Dashpotfunktionen verstanden, bei welchen der Fahrerwunsch bzw. der Sollmomentenvorgabewert des Fahrgeschwindigkeitsreglers einer Filterung zur Vermeidung abrupter Momentenänderungen unterzogen wird. Diese Filterung wird insbesondere auf den Momentensollwert, nicht jedoch auf den prädizierten Momentenwert angewendet. Entsprechend können auch Eigenschaften gefiltert werden, z.B. ausgewählte Eigenschaften wie die Stellzeitinformation. Ergebnis nach der Fahrkomfortvorsteuerung 206 ist ein Sollwert MSOLLFAVT für das Vortriebsmoment, für das prädizierte Vortriebsmoment MPRÄDFAVT sowie wenigstens eine diesen Größen zugeordnete Eigenschaft EMSOLLFAVT.

Die genannten Größen werden an einen Koordinator 208 weitergeführt, dem ferner weitere externe Eingriffsgrößen zugeführt werden, beispielsweise von einer Fahrstabilitätsregelung (ESP), einer Motorschleppmomentenregelung (MSR) und/oder einem Antriebsschlupfregelsystem (ASR) 210. Diese Funktion(en) gibt (geben) an den Koordinator 208 ebenfalls ein Sollvortriebsmoment (z.B. MSOLLESP) und entsprechenden Eigenschaften EMSOLLESP, die im bevorzugten Ausführungsbeispiel insbesondere die zur Einstellung notwendige Stellzeit beinhalten. Ferner ist ein Geschwindigkeitsbegrenzer 212 vorgesehen, welcher abhängig von dem Ausmaß des Überschreitens einer maximalen Fahrgeschwindigkeit des Fahrzeugs einen Momentensollwert MSOLLVAMX für das Vortriebsmoment zusammen mit entsprechenden Eigenschaften EMSOLLVMAX übermittelt. Diese Größen werden im Koordinator 208 koordiniert. Dort werden wie oben dargestellt die Momentensollwerte und die wenigstens eine Eigenschaft miteinander verknüpft, während das prädizierte Moment als das zukünftig, nach Abklingen dieser reduzierenden oder erhöhenden Eingriffen vermutlich einzustellen Moment nicht mit den Sollmomenten des externen Eingriffs koordiniert wird. z.B. bei länger anhaltenden reduzierenden Eingriffen kann auch ein durch den entsprechenden externen Sollmomentenwert beeinflusstes prädiziertes Moment ausgegeben werden. Im einfachsten Fall werden die Sollmomente auf der Basis von Maximal- und Minimalwertauswahlstufen ausgewählt und dem ausgewählten Sollmoment zugeordnete(n) Eigenschaft(en) sowie ggf. die Zustands- und Vorgabegrößen als resultierende Eigenschaften übernommen. Ausgang des Koordinators 208 ist also ein prädiziertes Vortriebsmoment MPRÄDVT, ein resultierendes Sollvortriebsmoment MSOLLVT sowie resultierende Eigenschaften EMSOLLVT. Physikalisch ist diesen Moment das Moment am Ausgangs des Triebstrangs des Fahrzeugs.

Zur Umrechnung der Vortriebsmomentenwerte in Getriebeausgangsmomentenwerte werden gemäß dem Ablaufdiagramm der Figur 3b die im Koordinator 208 ermittelten Größen, das prädizierte Vortriebsmoment und das Sollvortriebsmoment, im Schritt 213 nach Maßgabe der Strangverstärkung, d.h. dem Verstärkungsfaktor zwischen Abtrieb und Getriebe, der beispielsweise in einer Speicherzelle 218 fest vorgegeben ist, und dem Getriebeverlustmoment mgetrver umgerechnet. Letzteres wird abhängig vom aktuellen Betriebszustand des Getriebes beispielsweise mittels eines Kennfelds 220 gebildet. Ergebnis sind entsprechende Getriebeausgangsmomentenwerte. Die Eigenschaften werden, sofern keine Vortriebsmomentenwerte enthalten, nicht umgerechnet. In einem Ausführungsbeispiel erfolgt die Umrechnung in den Verknüpfungsstellen 214 bzw. 216, in denen die Sollmomentenwerte jeweils mit der Strangverstärkung multiplikativ verknüpft werden. Das auf diese Weise gebildete Sollgertriebeausgangsmoment und das prädizierte Getriebeausgangsmoment werden dann in Verknüpfungsstellen 218 bzw. 220 mit dem Getriebeverlustmoment mgetrver korrigiert. Im bevorzugten Ausführungsbeispiel wird das Getriebeverlustmoment dem prädizierten Moment bzw. dem Sollgetriebeausgangsmoment aufaddiert. Ferner werden mittels der eingestellten Getriebeübersetzung die Getriebeausgangsmomentenwerte in Kupplungsmomentenwerte umgerechnet.

Das prädizierte Moment und das Sollmoment sowie dessen Eigenschaftsvektor werden Koordinatoren 224 bzw. 226 zugeführt. In diesen beiden Koordinatoren werden Größen bezüglich des Getriebes, d.h. Vorgabegrößen der Getriebesteuerung für den Schaltvorgang und/oder einer Getriebeschutzfunktion, berücksichtigt. Bezüglich des Getriebeschutzes wird in 228 ein Maximalwert für das Kupplungsmoment vorgegeben, auf welchen das Sollkupplungsmoment begrenzt wird. Beim Getriebeeingriff wird ein bestimmter Kupplungsmomentenverlauf, der den Schaltvorgang optimiert, vorgegeben. Im Koordinator 226 wird das Sollkupplungsmoment mit diesen Sollmomenten verglichen und in einem Ausführungsbeispiel das kleinste als Sollkupplungsmoment weitergegeben. Insbesondere dem Sollmoment für den Getriebeeingriff ist wenigstens eine Eigenschaftsgröße zugeordnet, die beispielsweise die notwendige Stellzeit zur Realisierung der Momentenveränderung während des Schaltvorgangs vorgibt. Diese wird mit der wenigstens einen, entsprechenden Eigenschaftsgröße des Sollkupplungsmomentes koordiniert, wobei z.B. bei einem aktiven Schaltvorgang die Eigenschaftsgröße des Getriebeeingriffsmoments Vorrang hat. Im Koordinator 224 wird das Getriebeeingriffsmoment mit dem prädizierzen Kupplungsmoment verknüpft. In einem Ausführungsbeispiel wird das prädizierte Kupplungsmoment unverändert weitergegeben, während in einem anderen Beispiel insbesondere bei länger andauernden Eingriffen das prädizierte Moment durch das Getriebekupplungsmoment angepasst wird.

Die Ausgangsgrößen der Koordinatoren 224 bzw. 226 werden weiteren Koordinatoren 229 bzw. 230 zugeführt, in der die Momentenforderungen von Nebenaggregaten berücksichtigt werden. Diese werden beispielsweise durch Kennfelder 232 abhängig vom Betriebszustand des jeweiligen Nebenaggregats (Klimaanlage, Lüfter, etc.) bestimmt. Im Koordinator 230 das Sollkupplungsmoment mit den Verbrauchermoment MVERBR, welches die Summe der Momentenforderungen aller berücksichtigten Verbraucher darstellt, verknüpft, wobei dem Verbrauchermoment wenigstens eine Eigenschaftsgröße EMVERBR zugeordnet ist. Auch hier ist als Eigenschaft insbesondere die geforderte Stellzeit für die Einstellung der Momentenforderung der Verbraucher und ggf. der Status einzelner Verbraucher vorgesehen. In einem Ausführungsbeispiel wird im Koordinator 230 beispielsweise der Momentenbedarfswert MVERBR auf das Sollkupplungsmoment aufaddiert, wenn der entsprechende Verbraucher aktiv ist. Als resultierende Eigenschaft wird in dieser Ausführung z.B. die kürzeste Stellzeit weitergegeben. Im Koordinator 229 wird analog zum Koordinator 224 das zur Realisierung des Momentenbedarfs MVERBR der Verbraucher notwendige Reservemoment MRESNA mit dem prädizierten Kupplungsmoment verknüpft. In einem Ausführungsbeispiel wird das prädizierte Moment um das Reservemoment erhöht, so dass das prädizierte Kupplungsmoment erhöht wird, wenn eine Momentenerhöhung durch die Verbraucher zu erwarten ist (Einschalten), während das prädizierte Kupplungsmoment erniedrigt wird, wenn eine Erniedrigung des Momentenbedarfs der Verbraucher zu erwarten ist (z.B. Abschalten). Die Ausgangsgrößen der Koordinatoren 229 und 230 stellen die externen Größen dar, die in Figur 2 als Ausgangsgrößen des Koordinators 100 dargestellt sind. Der Koordinator 229 gibt ein prädiziertes Motorausgangsmoment MPRÄDEX, der Koordinator 230 ein Motorausgangssollmoment MSOLLEX und wenigstens eine zugeordnete Eigenschaftsgröße EMSOLLEX aus.

Die genannten Größen werden gemäß Figur 3c einem Koordinator 234 zugeführt, in dem diese Größen mit motorspezifischen Vorgabegrößen koordiniert werden. Dabei wird in einem bevorzugten Ausführungsbeispiel von einem Momentenbegrenzer 236 ein Sollwert MSOLLBEG mit zugeordneter Eigenschaftsgröße EMSOLLBEG sowie von einem Maximaldrehzahlbegrenzer 238 eine Sollgröße MSOLLNMAX mit zugehöriger Eigenschaftsgröße EMSOLLNMAX zugeführt. Der Sollwert des Momentenbegrenzers 236 wird z.B. nach Maßgabe der Größe des Überschreitens eines Grenzwertes für das Drehmoment durch das Istmoment, das Sollmoment des Maximaldrehzahlbegrenzers 238 abhängig vom Ausmaß des Überschreitens der Maximaldrehzahl durch die Drehzahl des Fahrzeugs ermittelt. Entsprechend werden die Stellzeiten als bevorzugte Eigenschaftsgröße vorgegeben. Wie in Figur 3c dargestellt, kann die Maximaldrehzahl nmax auch eine Eigenschaftsgröße des Vektor EMSOLLEX sein und von außen vorgegebenen werden.

Auf der Basis seiner Eingangsgrößen bildet der Koordinator 234 resultierende Ausgangsgrößen für das Motorausgangsmoment und der wenigstens einen zugeordneten Eigenschaft. Dabei wird im bevorzugten Ausführungsbeispiel aus den zugeführten Sollgrößen die kleinste ausgewählt und als Sollausgangsmoment MSOLLINT ausgegeben. In einem anderen Ausführungsbeispiel werden die Sollgröße mittels arithmetischer Operationen miteinander verknüpft. Das prädizierte Moment bleibt in einem Ausführungsbeispiel unverändert, in einem anderen wird es durch die Sollgrößen insbesondere bei länger andauernden reduzierenden Eingriff angepasst. Bezüglich der wenigstens Eigenschaftsgröße erfolgt ebenfalls eine Koordination, wobei Ergebnis wenigsten eine resultierende Eigenschaftsgröße EMSOLLINT ist, die bezüglich der Stellzeit je nach Ausführung die kürzeste der Stellzeiten oder die der resultierenden Momentengröße zugeordnete Stellzeit ist. Ferner sind wie vorstehend skizzierte Betriebszustandsinformationen Teil der Eigenschaftsgrößen.

Das Sollmoment msollint wird einer Verknüpfungsstelle 240 zugeführt, in der das Sollmoment in Abhängigkeit des Ausgangssignals eines Abwürgeschutzreglers 246 korrigiert wird. Dieses stellt ein Korrekturmoment DMAWS dar, welches in Abhängigkeit der Motordrehzahl und einer Abwürgeschutzsolldrehzahl gebildet wird, wobei die Größe des Korrekturmoments abhängig ist vom Abstand der Istdrehzahl zur Abwürgeschutzdrehzahl. Das Bedingungssignal B_akt, welches den Regler aktiviert, z.B. wenn ein Fahrerwunsch oder externer Eingriff vorliegt, ist bevorzugt wie in Figur 3c angegeben Teil des Eigenschaftsvektors EMSOLLEX. Das korrigierte Sollmoment wird dann einer Verknüpfungsstelle 242 zugeführt, in der dem Sollmoment ein Korrekturmoment DMLLR eines Leerlaufreglers 248 aufgeschaltet wird. Die Aktivierungsbedingungen B_akt und B_akt2 des Leerlaufreglers 248 (Leerlaufzustand, kein Fahrerwunsch, etc.) sind ebenfalls Teil des Eigenschaftsvektors EMSOLLEX. Ferner ist eine Minimaldrehzahl NMIN des Leerlaufreglers Teil des Eigenschaftsvektors. Das Korrekturmoment DMLLR wird auf der Basis von Istdrehzahl und Solldrehzahl gebildet. Dieses Korrekturmoment wird in der Verknüpfungsstelle 237 auch auf das prädizierte Moment MPRÄDINT aufgeschaltet.

Nach Maßgabe von temperatur- und drehzahlabhängigen Kennlinien oder Kennfeldern 250 werden die Motorverlustmomentewerte (Schleppmomentenwerte) MDS gebildet. Diese werden in den Verknüpfungsstellen 239 bzw. 244 auf das prädizierte Ausganasmoment und das Sollausgangsmoment aufgeschaltet. Ergebnis ist ein inneres prädiziertes Moment MPRÄDIN und ein inneres Sollmoment MSOLLIN, welche in weiteren Korrekturstufen 252 und 254 mit einem Referenzmoment MDNORM normiert werden. Ausgangsgrößen der Korrekturstufen 252 und 254 sind somit normierte, prädizierte innere Momente KPRÄDIN bzw. normierte Sollwerte für das innere Moment MSOLLIN. Das Normmoment wird abhängig von den Betriebsgrößen (beispielsweise Drehzahl und Last) in einem Kennfeld 256 gebildet. Der vom Koordinator 234 gebildete Eigenschaftsvektor EMSOLLINT wird nicht beeinflußt.

Das prädizierte innere Moment bzw. das innere Sollmoment werden gemäß Figur 3d dem Umsetzer 258 zugeführt, dem ferner auch der Eigenschaftsvektor EMSOLLINT, mit dem das innere Sollmoment umgesetzt werden soll, zugeführt wird. In dieser Ebene sind ferner Funktionen angeordnet, die direkt auf die Stellpfade des Motors Eingriff nehmen, beispielsweise ein Antiruckelregler 260, ein Regler 262, der eine gewisse Momentenreserve über den Zündwinkel für das Katheizen bereitstellt sowie der Leerlaufreglerteil 264, welcher den Leerlaufmomentenreservewert einstellt sowie den Zündwinkeleingriff des Leerlaufreglers durchführt. Ausgehend von den genannten Funktionen werden Steuergrößen dem Umsetzer 258 zugeführt, die dieser bei der Umsetzung des Sollmoments berücksichtigt. Die Informationen über den jeweiligen Aktivierungsbereich der Funktionen werden wie in Figur 3d angedeutet als Teil des Eigenschaftsvektors EMSOLLINT übertragen. Ausgehend vom Sollmomentenwert MSOLLIN bildet der Umsetzer 258 unter Berücksichtigung der Eigenschaften, insbesondere der erforderlichen Stellzeit, Sollmomente MSOLLFÜ für die Füllung, für den Zündwinkel MSOLLZW, für die Einspritzung bzw. Ausblendung MSOLLK und gegebenenfalls für den Lader MSOLLLAD. Diese werden durch die entsprechenden Stelleinrichtungen 266, 268, 270 und 272 eingestellt, wobei das Füllungssollmoment in eine Solldrosselklappenstellung umgerechnet, die anderen Sollmomente unter Berücksichtigung des Istmoment zur Verringerung der Abweichung umgesetzt werden. Eine solche Vorgehensweise ist bekannt. Das prädizierte Moment und die vom Katheizregler und vom Leerlaufregler gebildeten Reservewerten werden ebenfalls berücksichtigt. Vorzugsweise wird der Maximalwert der zur Verfügung stehenden Sollgrößen (MSOLLIN, MPRÄDIN, Reserve) gebildet und als Füllungsollwert ausgegeben. Abhängig von der Stellzeit werden die anderen Eingriffe aktiviert und entsprechende Sollgrößen gebildet. Die Ausgangsgrößen der Funktionen (Leerlaufregler, Antirukkelregler), die direkt auf die Stellpfade (hoher Zündwinkel) wirken, werden direkt auf die entsprechenden Sollmomente aufgeschaltet.

Die oben in Kombination dargestellten Maßnahmen werden je nach Ausführungsbeispiel in beliebiger Auswahl, auch einzeln, realisiert. Die bevorzugte Realisierung erfolgt dabei als Computerprogramm, welches in einem Speichermedium (Diskette, Speicherbaustein, Rechner, etc.) gespeichert ist.

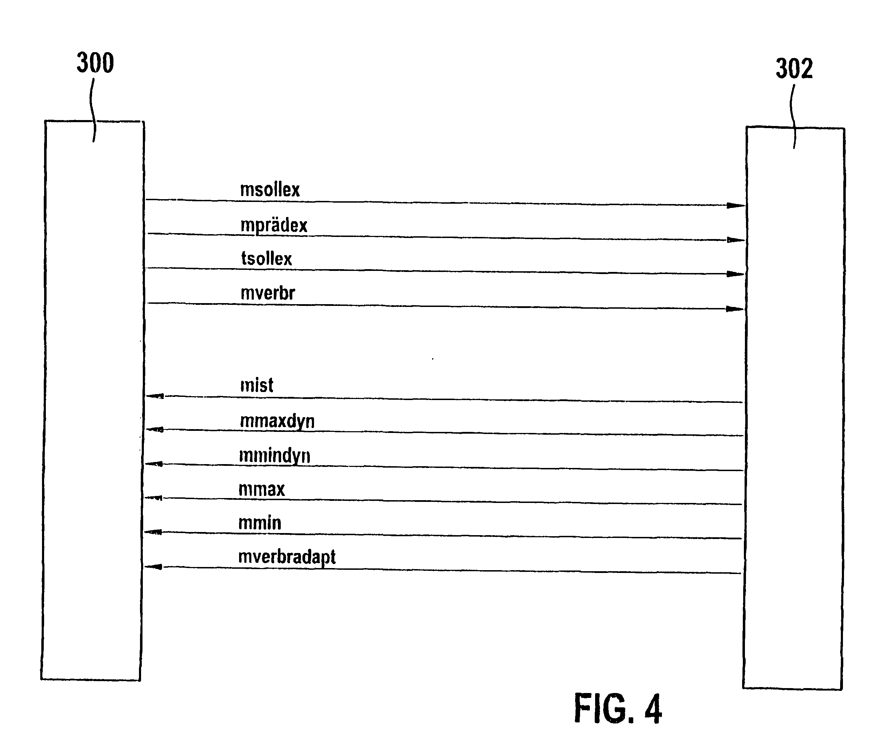

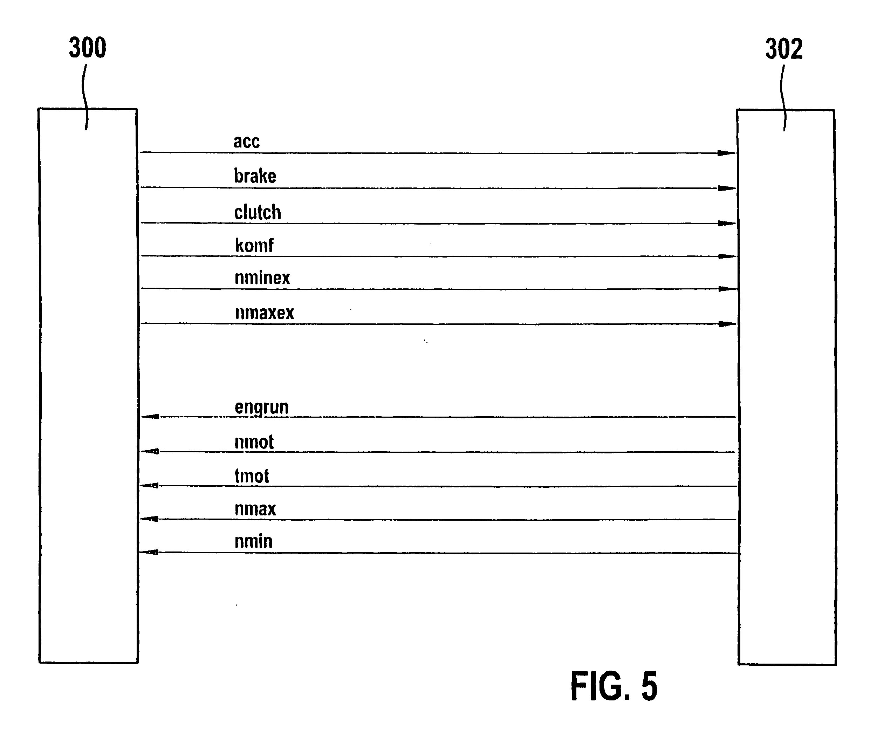

In den Figuren 4 und 5 ist in einem bevorzugten Ausführungsbeispiel eine konkrete Ausgestaltung der Schnittstelle zwischen dem motorspezifischen und dem motorunabhängigen Teil unter Angabe der vom jeweiligen Teil bereitzustellenden Größen dargestellt. Figur 4 betrifft dabei alle Drehmomentengrößen bzw. Größen die in unmittelbarem Zusammenhang zur Drehmomenteneinstellung stehen, während in Figur 5 weitere Größen dargestellt sind. Diese wurden vorstehend im wesentlichen als Eigenschaftsvektor zusammengefasst. Die Aufteilung in Figur 4 und 5 erfolgte dabei lediglich aus Übersichtlichkeitsgründen.

Die Besonderheit der in den Figuren 4 und 5 gezeigten Schnittstelle besteht unter anderem darin, dass auch Größen vom motorspezifischen Teil zum motorunabhängigen Teil übermittelt werden.

Die vom motorspezifischen Teil 302 und vom motorunabhängigen Teil 300 bereitzustellenden Drehmomentengrößen (vorzugsweise Kupplungsmomentengrößen, Kurbelwellenmomentengrößen oder andere Motorausgangsmomentengrößen) sind in Figur 4 dargestellt. Der motorspezifische Teil 302 und der motorunabhängige Teil 300 entspricht dabei im wesentlichen der Darstellung der Figur 3.

Wie bereits oben anhand der Ausführung nach Figur 3 dargestellt stellt der motorunabhängige Teil 300 die Größen Sollmoment MSOLLEX, prädiziertes Sollmoment MPRÄDEX, welches auch eine vorgegebene Momentenreserve enthalten kann, (beide z.B. in Nm) sowie die Sollstellzeit TSOLLEX (z.B. in msec), mit der das Sollmoment einzustellen ist, bereit. Letzteres ist vorstehend Teil des Eigenschaftsvektors. Ein Beispiel für die Verwendung dieser Größen im motorspezifischen Teil ist oben beschrieben. Ferner wird gemäß Figur 4 der Momentenbedarf der Nebenaggregate MVERBR (z.B. in Nm) vom motorunabhängigen Teil 300 bereitgestellt. Die Bestimmung dieses Momentenwerts ist oben beschrieben. Er stellt den Unterschied zwischen Motorausgangsmoment und Kupplungsmoment dar. Er wird im motorspezifischen Teil z.B. bei der Berechnung der Verlustmomente des Motors ausgewertet. In einem Ausführungsbeispiel wird ferner eine Momentenanforderungsgröße (z.B. in Nm), die in Figur 4 nicht dargestellt ist, vom motorunabhängigen Teil 300 zum motorspezifischen Teil 302 übermittelt, welche das Sollmoment ohne die Korrektur durch den Eingriff einer Getriebesteuerung beschreibt.

Der motorspezifische Teil 302 stellt auf Momentenebene gemäß Figur 4 das Istmoment MIST (vorzugsweise das Istmoment an der Kurbelwelle) zur Verfügung, welches gemessen oder berechnet wird. Ferner wird ein maximaler Verstellbereich der schnellen Pfades (Verstellung über Zündwinkel, Kraftstoffmenge, etc.) mittels maximalen und minimalen Momentenwerten MMAXDYN und MMINDYN, die über die beeinflussbaren Parameter des schnellen Verstellpfades einstellbar sind. Diese Größen werden z.B. von externen Funktionen wie z.B. einer Antriebsschlupfregelung ausgewertet, wobei z.B. MMAXDYN oder MMINDYN Informationen über den möglichen schnellen Verstellbereich bieten, während MIST bei der Berechnung der Vorgabewerte Eingang findet. Ferner werden vom motorspezifischen Teil 302 Kennlinien bereitgestellt, welche das maximal und das minimal stationär erreichbare Moment MMAX und MMIN (minimales Moment ist gleich maximal erreichbares Schleppmoment) beispielsweise über der Drehzahl beschreiben. Diese diesen als Zustandsinformation bei der Bestimmung der Getriebeschaltstrategie. Die Kennlinien werden in Form von Wertpaaren übertragen und im motorunabhängigen Teil abgelegt. Ferner stellt der motorspezifische Teil 302 eine Adaptionsgröße MVERBRADAPT für das Verbrauchermoment MVERBR bereit, welche auf bekannte Art ermittelt wird (vgl. z.B. DE-A 43 04 779 = US 5 484 351). Der motorunabhängige Teil ist mit dieser Information in der Lage, seine Berechnungen zum Verbrauchermoment MVERBR zu korrigieren bzw. abzugleichen. Nicht dargestellt sind weitere Größen, die entweder zusätzlich zu den oben genannten oder alternativ dazu vom motorspezifische Teil 302 zum motorunabhängigen Teil 300 übertragen werden, wie z.B. das aktuelle Schleppmoment, welches beispielsweise wie im oben angegebenen Stand der Technik berechnet wird, das aktuelle maximale Moment Kurbelwellenmoment, abhängig vom aktuellen Betriebszustand) und/oder unter optimalen Bedingungen (abhängig von Drehzahl, Meereshöhe, Temperatur, etc.) erreichbare Maximal- und Minimalmomente (Minimalmoment = maximal erreichbares Schleppmement). Alle Momentengrößen haben in einem Ausführungsbeispiel die Einheit Nm.

Außerhalb der Momentenebene wird wie Figur 5 zeigt vom motorunabhängigen Teil Betätigungssignale (entweder kontinuierlich oder als Schaltzustand) für das Fahrpedal (ACC), für die Bremsen (BRAKE) und für die Kupplung (CLUTCH) bereitgestellt (z.B. als %-Größe). Diese Größen werden im motorspezifischen Teil 302 z.B. zur Aktivierung verschiedener Funktionen wie Leerlaufregler, Komfortfunktionen, etc. ausgewertet. Um auch Systemverbunde abzudecken, die nicht über die dazu erforderliche Sensorik verfügen, ist vorgesehen, dass alternativ oder ergänzend über die Schnittstelle der Schaltzustand z.B. als Bitsignal) eines Bremspedalkontakts und/oder eines Kupplungspedalkontakts übermittelt wird. Nicht dargestellt ist ferner eine Information über den Leerlaufwunsch des Fahrers (Anforderung Minimalmoment, vorzugsweise ebenfalls Bitsignal), die in einem Ausführungsbeispiel alternativ oder zusätzlich übertragen werden kann. Eine weitere nicht dargestellte Größe (ebenfalls als Bitsignal) ist die Information, dass Kraftschluss im Triebstrang vorliegt.

Ferner wird eine Marke KOMF (codiertes Wort) zur Verfügung gestellt, die über den Betriebszustand von Komfortfunktionen wie einer Lastschlagdämpfungsfunktion oder eine Dashpotfunktion informiert (ob aktiv oder nicht). Diese Größe wird im motorspezifischen Teil 302 z.B. dazu verwendet, abzuschätzen, ob bei der Momenteneinstellung Komfortfragen zu beachten sind (z.B. Schnelligkeit der Verstellung, Ruckvermeidung, etc.), und/oder werden zur Aktivierung von Komfortfunktionen wie Lastschlagdämpfung- oder Dashpotfunktionen ausgewertet. Allgemein stellt diese Größe daher eine Information dar, ob dem Komfort der Steuerung eine hohe Priorität zukommt oder nicht. In dieser Größe kann auch oder alternativ die Information enthalten sein, ob der Fahrerwunschgradient aus Komfortgründen begrenzt ist, ob bei der Steuerung des Motors der Kraftschluss erhalten werden muss, ob ein Bauteileschutz nicht beachtet werden muss, ob ein dynamisches oder hochdynamisches Einstellung erforderlich ist, ob Komfortfunktionen bei der Einstellung des Motor zu beachten sind oder nicht, ob der Fahrerwunschwert mit höchster Priorität einzustellen ist, etc..

Weitere nicht dargestellte Größen können Informationen über Getriebemodus (Stellung Gebtriebebedienfeld, z.B. Neutral-, 1-, 2-, D-, R-, P-Stellung, Wintereinstellung, etc.), Getriebetyp (Handschalter, Automat, CVT, automatisiertes Schaltgetriebe), aktuell eingelegter Gang (Leerlauf, 1. Gang, 2.Gang, etc.) und/oder Information über die Stellung des Zündschalters (Aus, Standby, Radio, Steuergerät bestromt (Klemme 15), Anlasser (Klemme 50), etc.). Diese Information werden bevorzugt als Wort vorgegebener Länge gesendet, wobei die Information codiert ist.

Ferner oder ergänzend wird in einer Ausführung nicht motorspezifische Messgrößen vom motorunabhängigen Teil zum motorspezifischen Teil übertragen, z.B. Außentemperatur, Atmosphärendruck, Längsgeschwindigkeit, Batteriespannung, etc..

Ferner werden extern vorgegebene Minimal- und Maximaldrehzahlen (NMINEX, NMAXEX) bereitgestellt, die z.B. Vorgabegrößen in Verbindung mit dem Leerlaufregler und/oder dem Abwürgeschutzregler (NMINEX) bzw. einer Maximaldrehzahlbegrenzung (NMAXEX) darstellen.

Vom motorspezifischen Teil 302 wird eine Information ENGRUN (Motor läuft), motorspezifische Messgrößen wie die aktuelle Motordrehzahl NMOT und/oder die aktuelle Motortemperatur TMCT sowie die aktuellen Maximaldrehzahl NMAX und die aktuelle Minimaldrehzahl NMIN (= aktuelle Leerlaufsolldrehzahl) bereitgestellt. Diese Größen werden im motorunabhängigen Teil entweder zur Berechnungen verwendetet (NMOT z.B. bei der Bestimmung des Fahrerwunschmoments) oder dienen als Zustandsinformation. Nicht dargestellt sind der Integralanteil des Leerlaufreglers und/oder die Information über die durchgeführte Schubabschaltung, die in einer Ausführung zusätzlich oder alternativ vom motorspezifischen Teil zum motorunabhängigen Teil übertragen.

Die genannten Größen der Schnittstelle werden je nach Anwendung einzeln oder in beliebiger Kombination eingesetzt, abhängig von den Anforderung und Randbedingungen des jeweiligen Ausführungsbeispiels.

Je nach Anwendungsfall werden motorunabhängiger und motorspezifischer Teil in einer Rechnereinheit, in zwei verschiedenen Rechnereinheiten einer Steuereinheit oder in zwei räumlich getrennten Steuereinheiten implementiert.

## Patentansprüche

1. Verfahren zur Steuerung der Antriebseinheit eines Fahrzeugs, welche wenigstens eine Stellgröße aufweist, die abhängig von wenigstens einer Vorgabegröße für eine Ausgangsgröße der Antriebseinheit eingestellt wird, wobei diese Vorgabegröße aus mehreren Vorgabegrößen für die Ausgangsgröße ausgewählt wird, **dadurch gekennzeichnet, dass** in einem ersten Schritt lediglich Vorgabegrößen für die Ausgangsgröße, die unabhängig von der Antriebseinheit sind, zur Bildung einer ersten Vorgabegröße für die Ausgangsgröße herangezogen werden, und dass in einem zweiten Schritt lediglich aus dieser ersten Vorgabegröße und wenigstens einer motorspezifischen Vorgabegröße für die Ausgangsgröße eine die wenigstens eine Stellgröße beeinflussende zweite Vorgabegröße für die Ausgangsgröße gebildet wird.

2. Verfahren nach Anspruch 1, **dadurch gekennzeichnet, dass** die Ausgangsgröße ein Drehmoment der Antriebseinheit ist.

3. Verfahren nach einem der vorhergehenden Ansprüche, **dadurch gekennzeichnet, dass** in einem ersten Koordinator die erste Vorgabegröße abhängig von einer Fahrerwunschsollgröße, einer Sollgröße eines Fahrgeschwindigkeitsreglers, einer Sollgröße eines Fahrdynamikregelsystems, eines Motorschleppmomentenreglers, eines Antriebsschlupfreglers und/oder einer Maximalgeschwindigkeitsbegrenzung gebildet wird.

4. Verfahren nach Anspruch 3, **dadurch gekennzeichnet, dass** die Vorgabegröße ein Sollvortriebsmoment ist, welches unter Berücksichtigung der Verhältnisse im Triebstrang in ein Sollausgangsmoment der Antriebseinheit umgerechnet wird.

5. Verfahren nach einem der vorhergehenden Ansprüche, **dadurch gekennzeichnet, dass** ein zweiter Koordinator vorgesehen ist, der aus der ersten Vorgabegröße und wenigstens einer motorspezifischen Vorgabegröße die zweite Vorgabegröße bildet.

6. Verfahren nach Anspruch 5, **dadurch gekennzeichnet, dass** die Ausgangsgröße des zweiten Koordinators unter Berücksichtigung der Verlustmomente der Antriebseinheit in ein inneres Sollmoment umgerechnet wird.

7. Verfahren nach einem der vorhergehenden Ansprüche, **dadurch gekennzeichnet, dass** jeder Vorgabegröße wenigstens eine Eigenschaftsgröße zugeordnet ist, die wenigstens die gewünschte Stellzeit zur Einstellung der Vorgabegröße umfasst, wobei aus den Eigenschaftsgrößen verschiedener Vorgabegrößen in dem ersten und zweiten Koordinator wenigstens eine resultierende Eigenschaftsgröße gebildet wird.

8. Verfahren nach einem der vorhergehenden Ansprüche, **dadurch gekennzeichnet, dass** die zweite Vorgabegröße in einem Umsetzer nach Maßgabe der wenigstens einen resultierenden Eigenschaftsgröße in Stellgrößen für die Stellpfade der Antriebseinheit umgewandelt wird.

9. Verfahren nach einem der vorhergehenden Ansprüche, **dadurch gekennzeichnet, dass** ferner eine prädizierte Vorgabegröße ermittelt wird, welche in wenigstens einem Betriebszustand dem ungefilterten Fahrerwunschwert entspricht, in dessen Abhängigkeit die Antriebseinheit in wenigstens einem Betriebszustand eingestellt wird.

10. Vorrichtung zur Steuerung der Antriebseinheit eines Fahrzeugs, mit einer Steuereinheit, welche wenigstens einen Mikrocomputer umfasst, der wenigstens eine Stellgröße zur Steuerung der Antriebseinheit abhängig von wenigstens einem Vorgabewert für eine Ausgangsgröße der Antriebseinheit ausgibt, wobei diese Vorgabegröße aus mehreren Vorgabegrößen für die Ausgangsgröße ausgewählt wird, **dadurch gekennzeichnet, dass** die Steuereinheit einen ersten Koordinator umfasst, der lediglich Vorgabegrößen für die Ausgangsgröße, die unabhängig von der Antriebseinheit sind, zur Bildung einer ersten Vorgabegröße für die Ausgangsgröße heranzieht, und dass die Steuereinheit einen zweiten Koordinator umfasst, der lediglich aus dieser ersten Vorgabegröße und wenigstens einer motorspezifischen Vorgabegröße für die Ausgangsgröße eine die wenigstens eine Stellgröße beeinflussende zweite Vorgabegröße für die Ausgangsgröße bildet.

11. Vorrichtung nach Anspruch 10, **gekennzeichnet durch** einen ersten Teil mit motorunabhängigen Programmen, der über eine vordefinierte Schnittstelle mit einem zweiten Teil mit motorspezifischen Programmen in Verbindung steht, wobei der erste Teil an der Schnittstelle vorbestimmte Größen bereitstellt und vom motorspezifischen Teil vorbestimmte Größen empfängt.

12. Vorrichtung nach Anspruch 10 oder 11, **gekennzeichnet durch** einen Teil mit motorspezifischen Programmen, der über eine vordefinierte Schnittstelle mit einem Teil mit motorunabhängigen Programmen in Verbindung steht, wobei der motorspezifische Teil an der Schnittstelle vorbestimmte Größen bereitstellt und vom motorunabhängigen Teil vorbestimmte Größen empfängt.

13. Vorrichtung nach einem der Ansprüche 11 und 12, **dadurch gekennzeichnet, dass** die vom motorunabhängigen Teil bereitgestellte Größen Sollmoment, prädiziertes Sollmoment, Sollstellzeit, Verbrauchermoment, wenigstens eine Fahrpedal-, Bremsen-Kupplungsbetätigungsgröße, eine Information hinsichtlich des Komfort der Steuerung und/oder vorgegebene Minimal- und/oder Maximaldrehzahlwerte und/oder wenigstens eine Information über Getriebezustand bzw. -typ und/oder die Stellung des Zündschlüssel und/oder nicht motorspezifische Messgrößen sind, die vom motorspezifischen Teil bereitgestellte Größen Ist-Moment, maximal und/oder minimal dynamisch erreichbare Momentenwerte, stationäre maximale und/oder minimale Momente, maximale und/oder minimale Momente unter optimalen Bedingungen, ein Korrekturmoment für das Verbrauchermoment, eine Information, dass der Motor läuft, motorspezifische Messgrößen wie Motordrehzahl und/oder Motortemperatur, die Maximaldrehzahl und/oder eine Minimaldrehzahl und/oder eine Information über die durchgeführte Schubabschaltung und/oder den Integralanteil des Leerlaufreglers sind.

14. Speichermedium, in welchen ein Computerprogramm zur Anwendung bei einem der Verfahren nach Anspruch 1 bis 9 gespeichert ist.

## Claims

1. Method for controlling the drive unit of a vehicle, which has at least one setting parameter which is adjusted as a function of at least one specified parameter for an output parameter of the drive unit, this specified parameter being selected from a plurality of specified parameters for the output parameter, **characterized in that**, in a first step, only specified parameters for the output parameter which are independent of the drive unit are employed in order to form a first specified parameter for the output parameter, and **in that**, in a second step, a second specified parameter for the output parameter, which influences the at least one setting parameter, is formed only from this first specified parameter and at least one specified parameter for the output parameter which is specific to the engine.

2. Method according to Claim 1, **characterized in that** the output parameter is a torque of the drive unit.

3. Method according to one of the preceding claims, **characterized in that**, in a first coordinator, the first specified parameter is formed as a function of a required driver's requirement parameter, a required parameter of a vehicle speed control system, a required parameter of a vehicle dynamics control system, an engine drag torque control system, a drive-slip control system and/or a maximum vehicle speed limitation.

4. Method according to Claim 3, **characterized in that** the specified parameter is a required propulsion torque, which is converted into a required output torque of the drive unit, taking account of the relationships in the drive train.

5. Method according to one of the preceding claims, **characterized in that** a second coordinator is provided which forms the second specified parameter from the first specified parameter and at least one specified parameter specific to the engine.

6. Method according to Claim 5, **characterized in that** the output parameter of the second coordinator is converted into an internal required torque, taking account of the loss torques of the drive unit.

7. Method according to one of the preceding claims, **characterized in that** at least one property parameter, which comprises at least the desired setting time for adjusting the specified parameter, is associated with each specified parameter, at least one resultant property parameter being formed from the property parameters of various specified parameters in the first and second coordinator.

8. Method according to one of the preceding claims, **characterized in that** the second specified parameter is converted in a converter, in accordance with the at least one resultant property parameter, into setting parameters for the setting paths of the drive unit.

9. Method according to one of the preceding claims, **characterized in that** a predicated specified parameter is further determined which, in at least one operating condition, corresponds to the unfiltered driver's requirement value, as a function of which the drive unit is adjusted in at least one operating condition.

10. Appliance for controlling the drive unit of a vehicle, having a control unit which comprises at least one microcomputer, which outputs at least one setting parameter for controlling the drive unit as a function of at least one specified value for an output parameter of the drive unit, this specified parameter being selected from a plurality of specified parameters for the output parameter, **characterized in that** the control unit comprises a first coordinator which employs only specified parameters for the output parameter which are independent of the drive unit to form a first specified parameter for the output parameter, and **in that** the control unit comprises a second coordinator, which forms, only from this first specified parameter and at least one specified parameter for the output parameter specific to the engine, a second specified parameter for the output parameter influencing the at least one setting parameter.

11. Appliance according to Claim 10, **characterized by** a first part with programs independent of the engine, which first part is connected by means of a previously defined interface, to a second part with programs specific to the engine, the first part making predetermined parameters available at the interface and receiving predetermined parameters from the part specific to the engine.

12. Appliance according to Claim 10 or 11, **characterized by** a part with programs specific to the engine, which part is connected by means of a previously defined interface, to a part with programs independent of the engine, the part specific to the engine making predetermined parameters available at the interface and receiving predetermined parameters from the part independent of the engine.

13. Appliance according to one of Claims 11 and 12, **characterized in that** the parameters made available by the part independent of the engine are required torque, predicated required torque, required setting time, consumption unit torque, at least one accelerator pedal actuation, brake parameter, clutch actuation parameter, information with respect to the comfort of the control system and/or specified minimum and/or maximum rotational speed values and/or at least one item of information on gearbox condition and type and/or the position of the ignition switch and/or measurement parameters not specific to the engine, the parameters made available by the part specific to the engine - actual torque, maximum and/or minimum dynamically attainable torque values, steady-state maximum and/or minimum torques, maximum and/or minimum torques under optimum conditions, a correction torque for the consumption unit torque, information that the engine is running, measurement parameters specific to the engine such as engine rotational speed and/or engine temperature, the maximum rotational speed and/or a minimum rotational speed and/or information on the overrun cut-off which has been effected and/or the integral proportion of the idling control system.

14. Storage medium, in which a computer program for use in one of the methods of Claims 1 to 9 is stored.

## Revendications

1. Procédé de commande de l'unité d'entraînement d'un véhicule, qui présente au moins une grandeur de réglage réglée en fonction d'au moins une grandeur nominale pour une grandeur de sortie de l'unité d'entraînement, cette grandeur nominale étant choisie parmi plusieurs grandeurs nominales pour la grandeur de sortie,
**caractérisé en ce que**
dans une première étape pour former une première grandeur nominale pour la grandeur de sortie, on utilise pour la grandeur de sortie uniquement des grandeurs nominales indépendantes de l'unité d'entraînement, et dans une deuxième étape uniquement à partir de cette première grandeur nominale et d'au moins une grandeur nominale spécifique du moteur pour la grandeur de sortie, on forme pour la grandeur de sortie une deuxième grandeur nominale influençant l'au moins une grandeur de réglage.

2. Procédé selon la revendication 1,
**caractérisé en ce que**
la grandeur de sortie est un couple de rotation de l'unité d'entraînement.

3. Procédé selon l'une quelconque des revendications précédentes,
**caractérisé en ce que**
dans un premier coordinateur la première grandeur nominale est formée en fonction d'une grandeur de consigne suivant le souhait du conducteur, d'une grandeur de consigne d'un régulateur de vitesse de conduite, d'une grandeur de consigne d'un système de régulation de la dynamique de conduite, d'un régulateur du couple de patinage, d'un régulateur de patinage d'entraînement et/ou d'une limitation de vitesse maximale.

4. Procédé selon la revendication 3,
**caractérisé en ce que**
la grandeur nominale est un couple de propulsion de consigne qui est converti en un couple de sortie de consigne de l'unité d'entraînement en tenant compte des conditions dans le système moteur.

5. Procédé selon l'une quelconque des revendications précédentes,
**caractérisé en ce qu'**
un deuxième coordinateur forme la deuxième grandeur nominale à partir de la première grandeur nominale et d'au moins une grandeur nominale spécifique du moteur.

6. Procédé selon la revendication 5,
**caractérisé en ce que**
la grandeur de sortie du deuxième coordinateur est convertie en un couple de consigne interne en tenant compte des couples de pertes de l'unité d'entraînement.

7. Procédé selon l'une quelconque des revendications précédentes,
**caractérisé en ce qu'**
à chaque grandeur nominale on associe au moins une grandeur caractéristique qui comprend au moins le temps de réglage souhaité pour régler la grandeur nominale, en formant au moins une grandeur caractéristique résultante à partir des grandeurs caractéristiques de différentes grandeurs nominales dans le premier et le deuxième coordinateurs.

8. Procédé selon l'une quelconque des revendications précédentes,
**caractérisé en ce que**
la deuxième grandeur nominale est convertie dans un convertisseur en grandeurs de réglage pour les trajets de réglage de l'unité d'entraînement en fonction d'au moins une grandeur caractéristique résultante.

9. Procédé selon l'une quelconque des revendications précédentes,
**caractérisé en ce qu'**
en outre on détermine une grandeur nominale prédictive qui, dans au moins un état de fonctionnement, correspond à la valeur non filtrée souhaitée par le conducteur, valeur en fonction de laquelle l'unité d'entraînement est réglée dans au moins un état de fonctionnement.

10. Dispositif de commande de l'unité d'entraînement d'un véhicule avec une unité de commande, comprenant au moins un micro-ordinateur qui fournit au moins une grandeur de réglage pour la commande de l'unité d'entraînement en fonction d'au moins une valeur nominale pour une grandeur de sortie de l'unité d'entraînement, cette grandeur nominale étant choisie parmi plusieurs grandeurs nominales pour la grandeur de sortie,
**caractérisé en ce que**
l'unité de commande comprend, pour former une première grandeur nominale pour la grandeur de sortie, un premier coordinateur qui n'utilise pour la grandeur de sortie que des grandeurs nominales, qui sont indépendantes de l'unité d'entraînement, et l'unité de commande comprend un deuxième coordinateur qui, uniquement à partir de cette première grandeur nominale et d'au moins une grandeur nominale spécifique du moteur pour la grandeur de sortie, forme pour la grandeur de sortie une deuxième grandeur nominale influençant l'au moins une grandeur de réglage.

11. Dispositif selon la revendication 10,
**caractérisé en ce qu'**
une première partie contenant des programmes indépendants du moteur, est en communication par une interface prédéfinie avec une deuxième partie contenant des programmes spécifiques du moteur, la première partie fournissant à l'interface des grandeurs prédéfinies et recevant des grandeurs prédéfinies de la partie spécifique du moteur.

12. Dispositif selon la revendication 10 ou 11,
**caractérisé en ce qu'**
une partie contenant des programmes spécifiques du moteur, est en communication par une interface prédéfinie avec une partie contenant des programmes indépendants du moteur, la partie spécifique du moteur fournissant à l'interface des grandeurs prédéfinies et recevant des grandeurs prédéfinies de la partie indépendante du moteur.

13. Dispositif selon l'une des revendications 11 et 12,
**caractérisé en ce que**
les grandeurs fournies par la partie indépendante du moteur sont le couple de consigne, le couple de consigne prédictif, le temps de réglage de consigne, le couple de consommateur, au moins une grandeur d'actionnement de la pédale d'accélérateur, de frein ou d'embrayage, une information concernant le confort de la direction et/ou des valeurs de vitesse de rotation minimale et/ou maximale prédéfinies et/ou au moins une information concernant l'état ou le type de transmission et/ou la position de la clé de contact et/ou des grandeurs de mesure non spécifiques du moteur, les grandeurs fournies par la partie spécifique du moteur sont le couple réel, des valeurs momentanées maximales et/ ou minimales pouvant être atteintes dynamiquement, des couples maximaux et/ou minimaux stationnaires, des couples maximaux et/ou minimaux dans des conditions optimales, un couple de correction pour le couple de consommateur, une information indiquant que le moteur tourne, des grandeurs de mesures spécifiques du moteur telles que la vitesse de rotation du moteur et/ou la température du moteur, la vitesse de rotation maximale et/ou minimale et/ou une information concernant la désactivation de la propulsion et/ ou la partie intégrale du régulateur de marche à vide.

14. Moyen de mémorisation, contenant un programme informatique enregistré destiné à l'application de l'un des procédés selon les revendications 1 à 9.
